# EUROPEAN PATENT APPLICATION

(11) **EP 4 696 585 A1**
(43) Date of publication of application: **18.02.2026**
(21) Application number: 25194492.2
(22) Date of filing: 07.08.2025
(51) Int. Cl.: B62B 3/14

(54) **DOCKING STATION WITH AN INTEGRATED FRAME FOR MOUNTING INSIDE THE PATIENT COMPARTMENT OF AN AMBULANCE**

(30) Priority: 13.08.2024 US 202463682490 P
(71) Applicant: Giampavolo, Paul, 34119 Naples (IT); Johnson, Christopher M., Glen Allen, VA 23059 (US)
(72) Inventor: Giampavolo, Paul, 34119 Naples (IT); Johnson, Christopher M., Glen Allen, VA 23059 (US)
(74) Representative: Herrero & Asociados, S.L.

(57) **Abstract**

A docking station that includes an infant carrier holder; a support frame supporting the infant carrier holder; and a plurality of couplers arranged on the support frame to engage a support bracket in order to detachably mount the support frame to the support bracket, and a system that includes the docking station and the support bracket.

## Description

### REFERENCE TO RELATED APPLICTION AND CLAIM OF PRIORITY

The present application claims priority to U.S. Provisional Application Serial No. 63/682,490, filed on August 13, 2024, by Paul GIAMPAVOLO and Christopher M. JOHNSON, the contents of which are incorporated by this reference.

### FIELD OF THE INVENTION

The present invention relates to a docking station with a universal infant carrier holder configured to receive and hold any type of infant carrier, which is integrated with a support frame that is detachably mountable to brackets fixed to a surface inside of the patient compartment of an ambulance.

### SUMMARY OF THE INVENTION

It is an object of the present invention to provide a docking station with a universal infant carrier holder (such as the infant carrier holder disclosed in U.S. 9,540,026, the disclosure of which is incorporated by this reference) on a support frame that is configured to be removably coupled to mounting brackets that are fixed to a surface, in particular, a surface in the patient compartment of an ambulance. The mounting brackets can be mounted to any surface (right wall, left wall, floor, or rear wall) inside of the patient compartment and the support frame has couplers on multiple surfaces thereof whereby it can be mounted to any one of a plurality of surfaces and facings located in the patient compartment of an ambulance.

A docking station according to the present invention includes an infant carrier holder; a support frame supporting the infant carrier holder; and a plurality of couplers arranged on the support frame to engage a support bracket in order to detachably mount the support frame to the support bracket.

The couplers may be slidable in slots defined in the support bracket.

Each coupler may include a support that extends from an exterior surface of the support frame, and a head at a distal end of the support and wider than the support thereof.

The couplers may be spaced from one another and arranged to form a plurality of columns.

The support frame may include a front plate, a right plate, a left plate, and a bottom plate, wherein the plurality of couplers are arranged on at least one of the plates, at least some of the plates, or all of the plates.

The docking station may further include a tie rod fastened at one end to the right plate and at another end to the left plate, the tie rod connecting the ends of the right plate and the left plate that are opposite ends connected to the front plate, and passing through a collar, which is fastened to the bottom plate, whereby the bottom plate is attached to the tie rod.

The plates may be discreet bodies connected to one another by connectors.

The plates may form a single body.

At least one of the plates may be a discreet body.

The docking station may further include at least one index pin extending from one of the plates, and receivable in a hole defined in the bracket to secure the support frame against movement relative to the support bracket.

The docking station may further include a two-piece, length-adjustable strap attached to the infant carrier holder and the support frame.

The docking station may further include a left side bracket and a right side bracket fastened to a left side and a right side of the infant carrier holder respectively, wherein the two-piece, length-adjustable strap is attached to the left side bracket and the right side bracket.

The support frame may include a front plate, wherein the infant carrier holder is attached to the front plate using a left side front bracket and a right side front bracket, each having a side section attached to a side of the infant carrier holder, and another section attached to the front plate.

Each another section may be attached to the front plate with a respective interconnector that is attached to the front plate, wherein each interconnector has a first surface attached to the front plate, and a second surface oriented so that, when the support frame is attached to the bracket that are fixed to a surface in the patient compartment of an ambulance, the infant carrier holder is oriented with a tilt angle in the range 40°-45° degrees relative to the horizontal plane.

The docking station may further include a carrying bar coupled to the interconnectors.

A system according to the present invention includes a docking station according to the present invention, and the support bracket, the support bracket having mounting holes for mounting on a wall, and a plurality of spaced slots each for receiving at least one of the couplers.

In the system, each coupler may include a support that extends from an exterior surface of the support frame, and a head at a distal end of the support and wider than the support thereof, and each slot may have two sections, which together form an elongated channel with a cross section that has two different widths, wherein the first section of each slot has a width that is dimensioned to permit the reception of the head of a respective coupler, wherein the second section of each slot is only wide enough to permit the entry of the support of the respective coupler but not the head thereof, wherein the second section of each slot extends from the exterior surface of the bracket to the first section, wherein the first section extends from the second section into the body of the bracket, and wherein the head of each coupler is receivable in a slot from an open end thereof.

The system may further include an index pin on the support frame, wherein the support bracket has at least one hole for receiving the index pin to secure the support frame against movement relative to the support bracket.

In the system, the slots in the support bracket may be vertically oriented once the support bracket is installed.

In the system, the slots in the support bracket may be horizontally oriented once the support bracket is installed.

Other features and advantages of the present invention will become apparent from the following description of the invention which refers to the accompanying drawings.

### BRIEF DESCRIPTION OF THE DRAWINGS

Fig. 1 shows a front, right, top perspective view of a docking station according to the present invention.
Fig. 2 shows the docking station of Fig. 1 with mounting brackets connected to the front plate of its support frame.
Fig. 3 shows a front, left, top perspective view of the docking station of Fig. 1 with mounting bracket coupled to the left plate of its support frame.
Fig. 4 shows a right, rear, bottom perspective view of the docking station of Fig. 1 with mounting brackets coupled to the bottom plate of its support frame.
Fig. 5 shows a perspective view of a mounting bracket.
Fig. 6 shows a perspective view of the mounting bracket of Fig. 5 with couplers received in the slots defined therein.
Fig. 7 shows a coupler used to couple a mounting bracket to one of the plates of the support frame of the docking station shown in Fig. 1.
Fig. 8 shows a front, bottom perspective view of a mounting bracket for mounting the support frame of the docking station of Fig. 1 to a surface.
Fig. 9 shows the docking station of Fig. 1 with the infant carrier holder thereof removed from view.
Fig. 10 shows a top view of the docking station of Fig. 1 with the infant carrier holder thereof removed from view.
Fig. 11 shows a right, top perspective view of a subassembly of selected components of the docking station of Fig. 1.
Fig. 12 shows a left, bottom perspective view of a subassembly of selected components of the docking station of Fig. 1.
Fig. 13 shows a right, bottom perspective view of selected components of the docking station of Fig. 1 in a partially assembled state.
Fig. 14 shows a bottom view of the components shown in Fig. 13.
Fig. 15 shows a perspective view of a bracket component of the docking station of Fig. 1.
Fig. 16 shows an end of the strap section of the docking station of Fig. 1 with components used for connecting to the bracket component shown in Fig. 15.
Fig. 17 shows an interconnector used to connect the bracket component that is connected to the infant carrier holder of the docking station of Fig. 1 to the front plate of the support frame.
Fig. 18 shows a single bracket with four vertically oriented slots according to an embodiment of the present invention.
Fig. 19 shows a single bracket with horizontally oriented slots according to another embodiment of the present invention.
Fig. 20 shows a docking station according to the present invention with an optional carrying bar.

### DETAILED DESCRIPTION

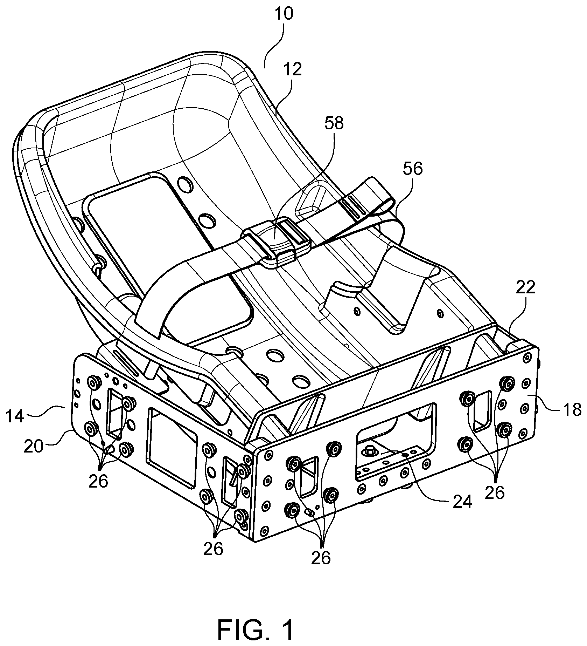

Referring to Fig. 1, the present invention is a docking station 10. The docking station 10 includes an infant carrier holder 12, and a support frame 14.

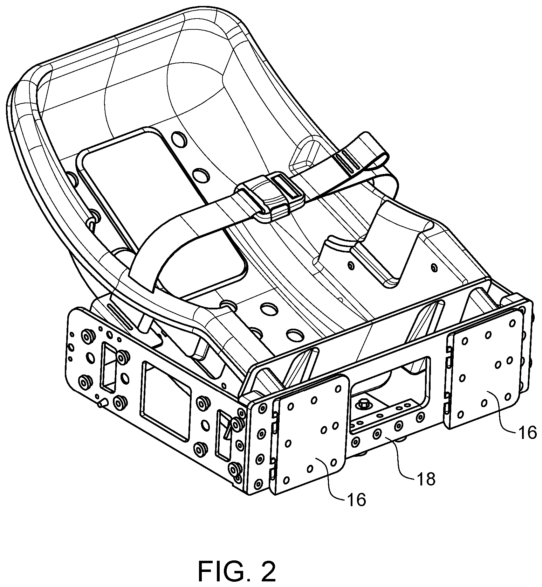

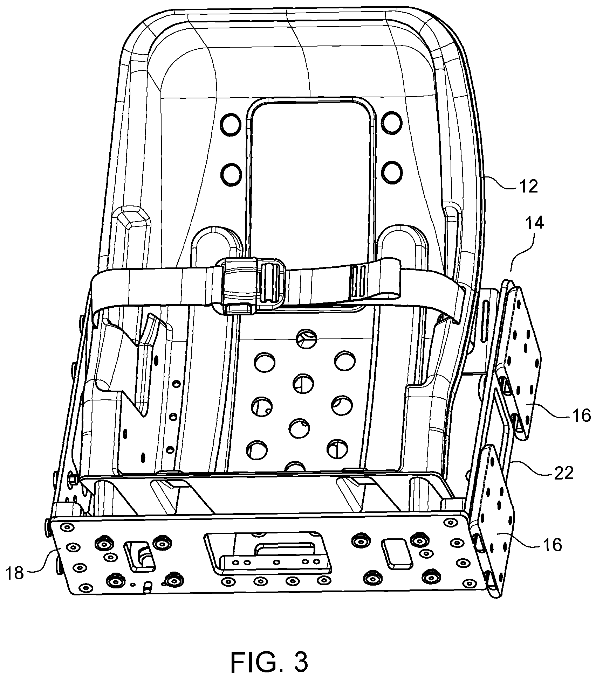

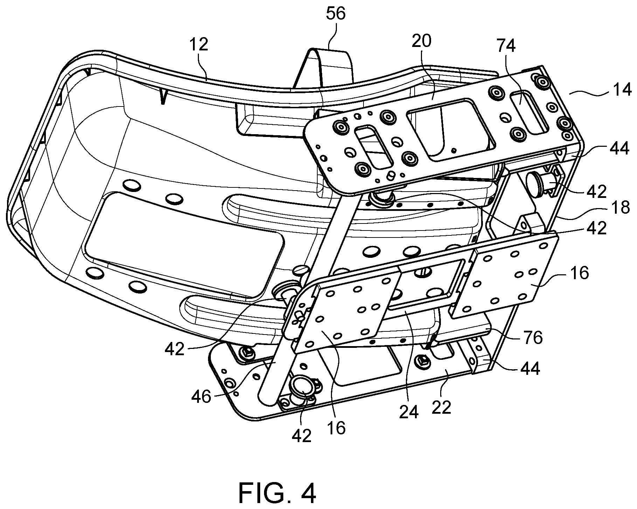

The support frame 14 is equipped with couplers 26 that permit the support frame 14 to be detachably mounted to brackets 16 as seen in Figs. 2, 3, and 4.

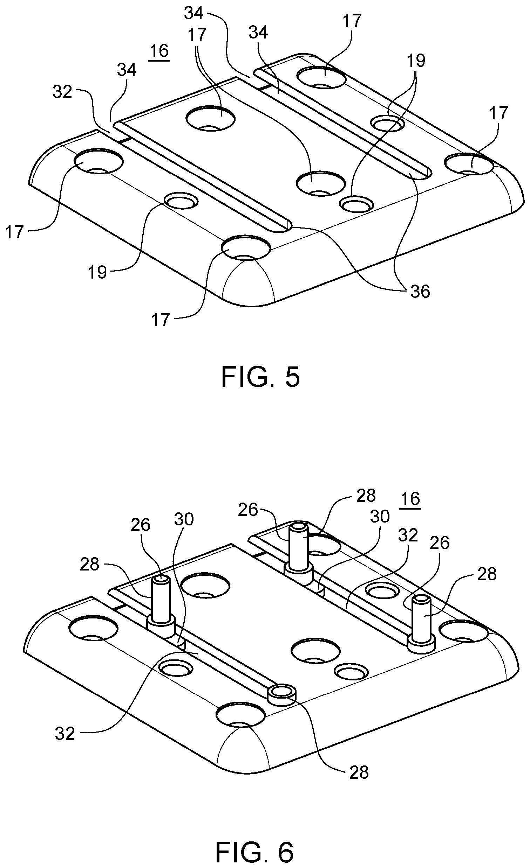

Referring to Fig. 5, the brackets 16 have mounting holes 17 therein so that they may be fixed to the floor and/or an interior wall (right wall, left wall, or rear wall) of the patient compartment of an ambulance with fasteners (e.g. screws), or any other suitable means of attachment.

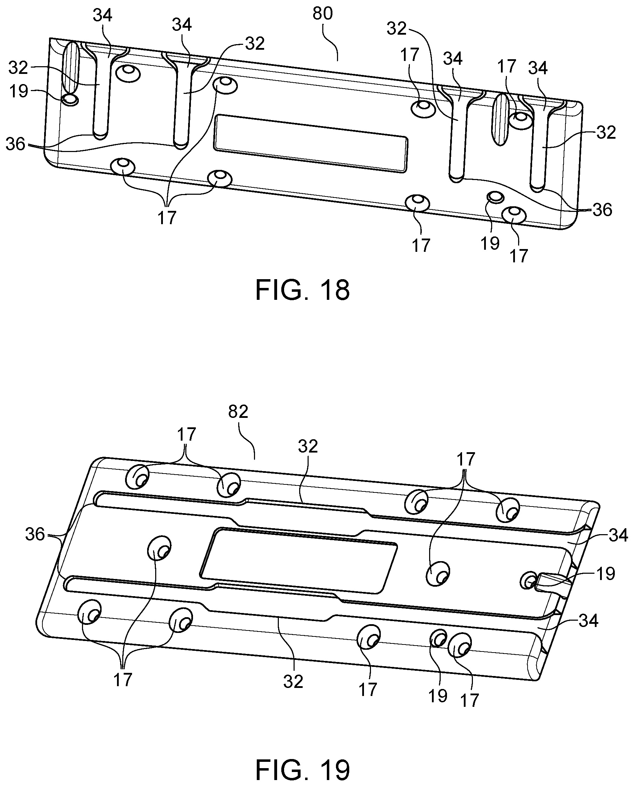

It should be noted that while the embodiment shown uses two brackets 16, a single bracket (Figs. 18 and 19) could be used without deviating from the present invention.

The infant carrier holder 12 may be made from a suitable plastic and may have the same or a substantially similar configuration to the infant carrier holder disclosed in U.S. Patent No. 9,540,026, which can receive and hold any type of infant carrier (i.e. it is a universal infant carrier holder).

Referring back to Figs. 1-4, the support frame 14 may include a front plate 18, a right plate 20, a left plate 22, and a bottom plate 24.

In the embodiment shown in Fig. 1, the plates 18, 20, 22, 24 are discrete bodies that are connected to one another, but the support frame 14 could be made of a single plate or less than four discrete plates.

Each plate 18, 20, 22, 24 has mounted thereon a plurality of couplers 26.

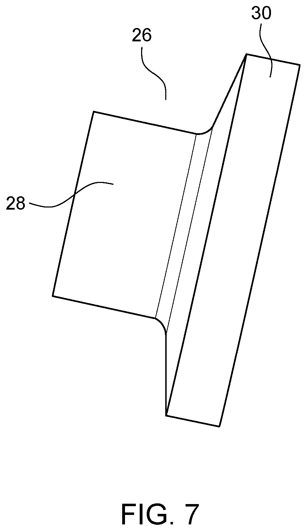

Referring to Fig. 7, each coupler 26 may include a support 28 that is, for example, a cylindrical body bolted to and extending from the exterior surface of a respective plate 18, 20, 22, 24, and a head 30 at a distal end of the support 28.

As seen in Figs. 1-4, the couplers 26 are spaced from one another and arranged to form a plurality of columns (in this embodiment four columns on each plate 18, 20, 22, 24).

Referring to Fig. 6, the heads 30 of couplers 26 of each column are receivable in a respective slot 32 defined in the body of a bracket 16.

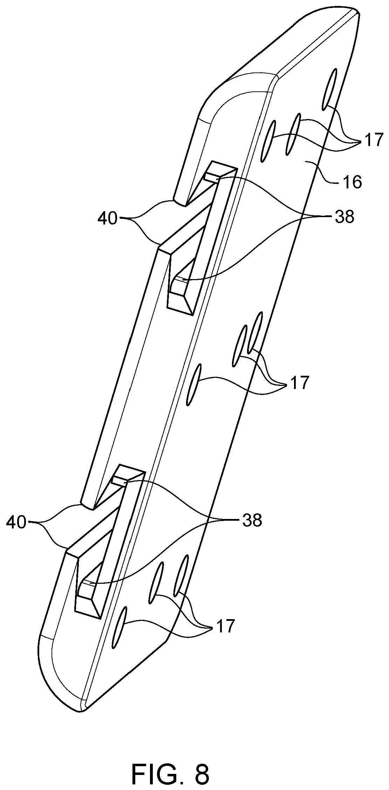

Referring to Fig. 8, in the embodiment shown, each slot 32 has two sections 38, 40, which together form an elongated channel with a cross section that has two different widths (for example, a T-shaped cross-section).

The first section 38 of each slot 32 has a width that is dimensioned to permit the reception of a head 30 and naturally a portion of its associated support 28 therein.

The second section 40 of each slot 32 is only wide enough to permit the entry of the support 28, but not the head 30 of a coupler 26.

In each bracket 16, the second section 40 of a slot 32 thereof extends from the exterior surface of the bracket 16 to the first section 38, and the first section 38 extends from the second section 40 into the body of the bracket 16.

The head 30 of a coupler 26 may be received in a slot 32 from the open end 34 of the slot 32.

The head 30 may be moved axially along the longitudinal axis of the slot 32 toward its blind end 36, and may only exit the slot 32 from the open end 34 thereof. Consequently, each column of couplers 26 may be received in a respective slot 32 of a bracket 16, and if the bracket 16 is fixed to the ambulance as described, the support frame 14 is detachably mounted to the ambulance.

As can be appreciated, the couplers 26 in the slots 32 have one degree of freedom of movement, which is along the slots 32. Otherwise, the support frame 14 is secured against movement in other directions, which is important because an ambulance can travel fast, and make sudden stops and turns. In order to prevent the couplers 26 from exiting the slots 32, removable index pins 42 may be used. Each index pin 42 may pass through the plate 18, 20, 22, 24 that is mounted to a bracket 16 and received in a hole 19 defined in the bracket 16 to prevent plate 18, 20, 22, 24 from moving relative to the bracket 16. Each bracket 16 may have a plurality of holes 19 at different locations so that it may be able to receive an index pin 42 located on any one of the plates 18, 20, 22, 24. It is, therefore, not necessary to have a unique bracket 16 for each plate 18, 20, 22, 24. It should also be noted that a bracket 16, when mounted on a vertical wall (right wall, left wall, or rear wall) of the patient compartment of an ambulance, could be oriented so that the open ends 34 of its slots 32 are above the blind ends 36 thereof to permit the couplers 26 to "fall into" the slots 32, whereby the couplers 26 are further secured against movement relative to the bracket 16.

To disengage the plate 18, 20, 22, 24, the index pin 42 is retracted from the hole 19 in which it is received to permit the support frame 14 to move relative to the bracket 16.

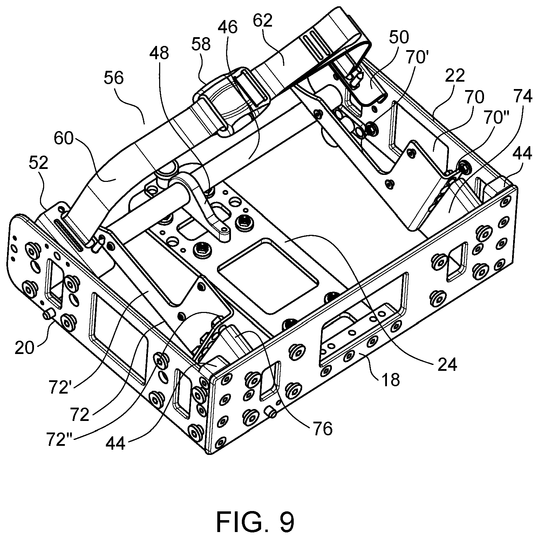

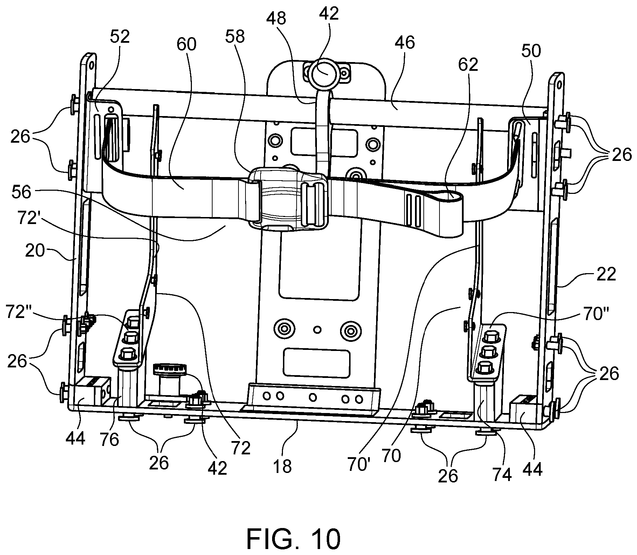

Referring to Figs. 9 and 10, the right plate 20, the left plate 22, and the bottom plate 24 may be attached to the front plate 18 using a respective intermediate coupler 44.

Each coupler 44 is an elongated body that is fastened (with, for example, bolts or screws) on the one hand to the front plate 18 along a respective edge (bottom edge or one of the side edges) thereof, and on the other hand to a respective end of one of the right plate 20, the left plate 22, and the bottom plate 24.

A tie rod 46 is fastened (with a screw or a bolt, for example) at one end to the right plate 20 and at another end to the left plate 22. The tie rod 46 connects the ends of the right plate 20 and the left plate 22 that are opposite the ends connected to the front plate 18. The tie rod 46 passes through a collar 48, which is fastened to the bottom plate 24 (with screws or bolts, for example), whereby the bottom plate 24 is attached to the tie rod 46.

A left side bracket 50 and a right side bracket 52 are fastened (with bolts or screw, for example) to the interior surface of the left plate 22 and the interior surface of the right plate 20 respectively.

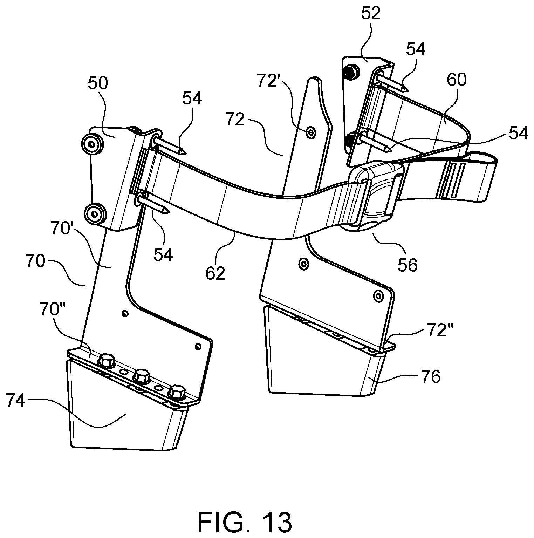

Each side bracket 50, 52 is coupled to the infant carrier holder 12 with screws 54, for example (Fig. 13).

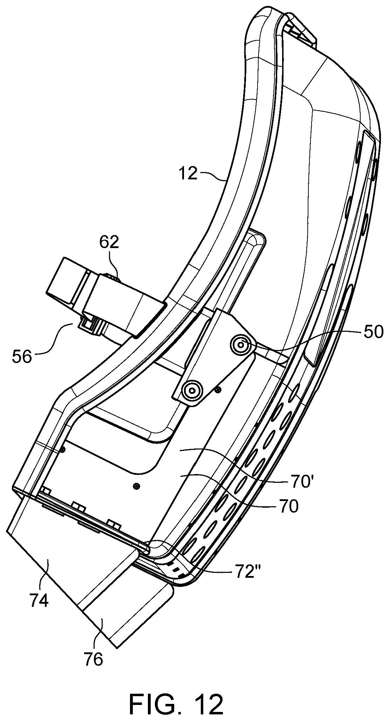

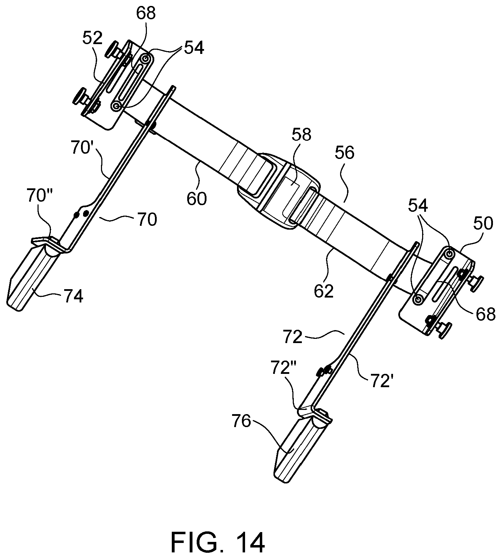

Referring to Figs. 9-16, a two-piece, length-adjustable strap 56, which has, for example, a snap buckle 58, is also integrated with the left side bracket 50 and the right side bracket 52. Specifically, a section that includes an end of a first part 60 (the end opposite to the section with an end connected to one part of the snap buckle 58) of the strap 56 passes through the infant carrier holder 12 and is directly attached to the left side bracket 50. Similarly, a section that includes an end of a second part 62 of the strap 56 (the end opposite to the section that includes an end connected to the other part of the snap buckle 58) passes through the infant carrier holder 12 and is directly attached to the right side bracket 52.

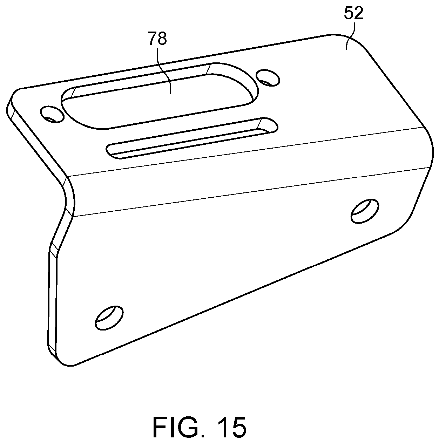

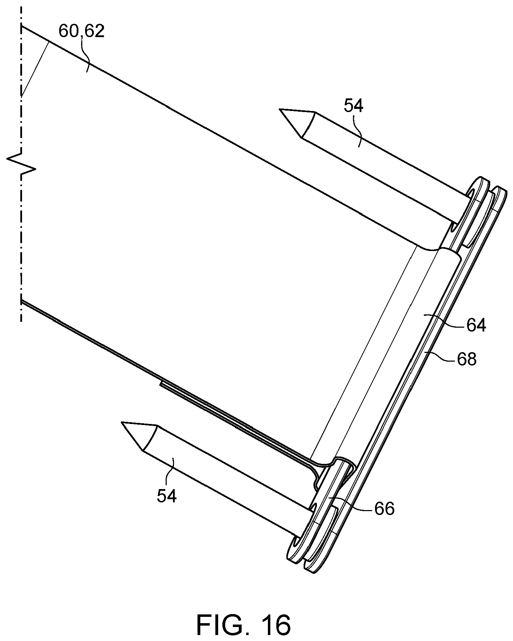

Referring specifically to Fig. 16, to implement direct attachment of the ends of the first part 60 and the second part 62, each said end may have a loop 64 that is passed through a slot 78 (Fig. 15) in the left or the right bracket 50, 52 (only bracket 52 shown it being understood that bracket 50 has the same slot 78 and is coupled to an end of a section of the strap 56 in the same manner as described herein) as the case may be. An elongated first plate 66 may pass through the loop 64, and an elongated second plate 68 is arranged outside the loop 64, whereby a portion of the loop 64 is sandwiched between the first plate 66 and the second plate 68. The elongated plates 66, 68 are longer than the slot 78 in which the loop 64 is received and thus prevent the loop 64 from being extracted from the slot 78, whereby the strap 56 is prevented from disengagement from the left and right side brackets 50,52.

Preferably, the screws 54 pass through the ends of the elongated plates 66, 68 and are embedded in the body of the infant carrier holder 12 for further security.

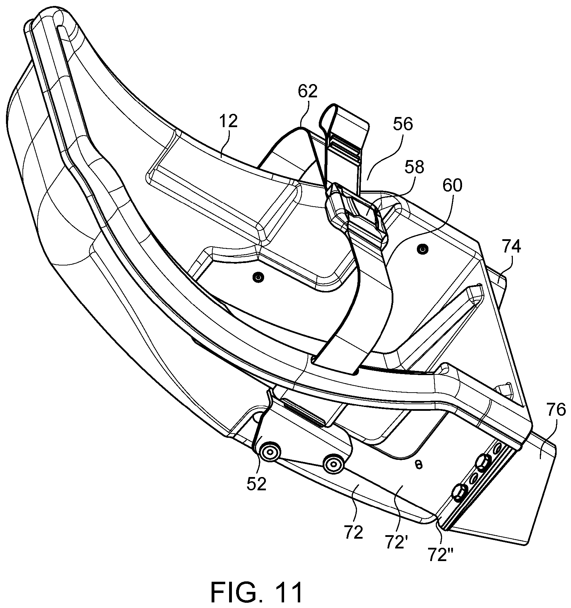

Referring to Figs. 11-14, the infant carrier holder 12 is also attached to the front plate 18 using a left side front bracket 70 and a right side front bracket 72. Each bracket 70, 72 has a side section 70', 72' attached to a side of the infant carrier holder, and another section 70", 72" that is fastened (with bolts or screws, for example) to an interconnector 74, 76. Each interconnector 74, 76 is also fastened (with bolts or screws, for example) to the front plate 18.

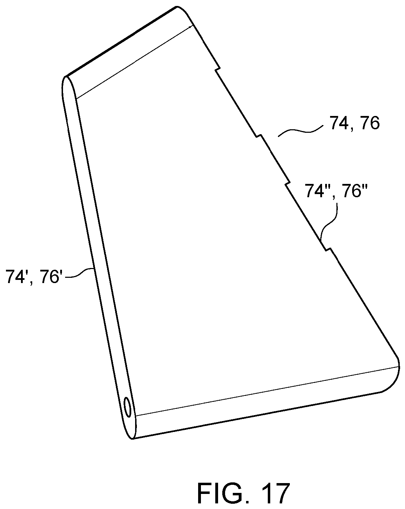

Referring to Fig. 17, each interconnector 74, 76 is a body that has a first surface 74', 76' which attaches to the front plate 18, and a second surface 74", 76" which is fastened (with screws or bolts for example) to a section 70", 72".

The second surfaces 74", 76" are oriented so that, when the support frame 14 is attached to the brackets 16 that are fixed to a surface in the patient compartment of an ambulance, the infant carrier holder 12 is oriented with a tilt angle in the range 40°-45° degrees relative to the floor (horizontal plane) of the patient compartment.

Referring to Fig. 18, in which like numerals identify like feature, the two brackets 16 could be replaced with a one-piece bracket 80 having four slots 32 with the same function as previously described. The four slots 32 would be vertically oriented once the bracket 80 is installed in place.

Referring to Fig. 19, in which like numerals identify like features, instead of four slots 32 that would be vertically oriented when the bracket 80 is installed in place, a one-piece bracket 82 may have two slots 32 that would be horizontally oriented when the bracket 82 is installed in place. As should be apparent, in use, each horizontally oriented slot 32 receives the heads 30 of couplers 26 of each row of couplers 26.

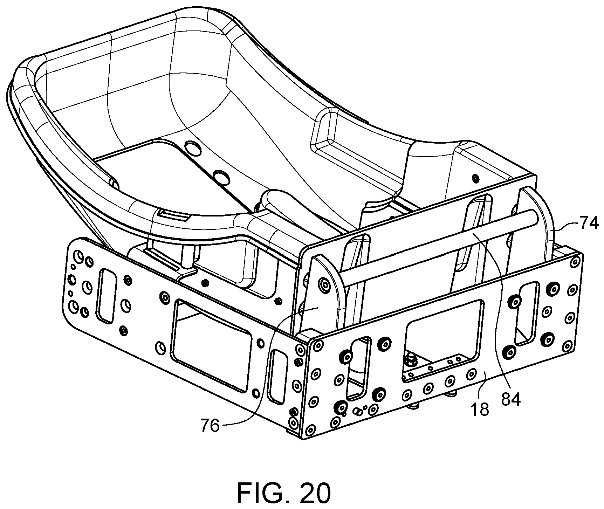

Referring to Fig. 20, the interconnectors 74, 76 may be extended, and an optional carrying bar 84 may be coupled (with screws or bolts, for example) to the interconnectors 74, 76.

Although the present invention has been described in relation to particular embodiments thereof, many other variations and modifications and other uses will become apparent to those skilled in the art. It is preferred, therefore, that the present invention be limited not by the specific disclosure herein, but only by the appended claims.

### List of Features

dock station 10
infant carrier holder 12
support frame 14
brackets 16
mounting holes 17
front plate 18
right plate 20
left plate 22
bottom plate 24
couplers 26
support 28
head 30
slot 32
open end 34
blind end 36
first section 38
second section 40
index pin 42
coupler 44
tie rod 46
collar 48
left side bracket 50
right side bracket 52
screws 54
strap 56
snap buckle 58
first part 60
second part 62
loop 64
first plate 66
second plate 68
left side bracket 70
right side bracket 72
side section 70'
side section 72'
another section 70"
another section 72"
interconnector 74
interconnector 76
first surface 74'
first surface 76'
second surface 74"
second surface 76"
slot 78
one-piece bracket 80
one-piece bracket with horizontally oriented slots 82
optional carrying bar 84

## Claims

1. A docking station, comprising:
an infant carrier holder;
a support frame supporting the infant carrier holder; and
a plurality of couplers arranged on the support frame to engage a support bracket in order to detachably mount the support frame to the support bracket.

2. The dockinig station of claim 1, wherein the couplers are slidable in slots defined in the support bracket.

3. The docking station of claim 2, wherein each coupler includes a support that extends from an exterior surface of the support frame, and a head at a distal end of the support and wider than the support thereof.

4. The docking station of claim 3, wherein the couplers are spaced from one another and arranged to form a plurality of columns.

5. The docking station of claim 1, wherein the support frame includes a front plate, a right plate, a left plate, and a bottom plate, wherein the plurality of couplers are arranged on at least one of the plates, at least some of the plates, or all of the plates.

6. The docking station of claim 5, further comprising a tie rod fastened at one end to the right plate and at another end to the left plate, the tie rod connecting the ends of the right plate and the left plate that are opposite ends connected to the front plate, and passing through a collar, which is fastened to the bottom plate, whereby the bottom plate is attached to the tie rod.

7. The docking station of claim 5, wherein the plates are discreet bodies connected to one another by connectors.

8. The docking station of claim 5, whereing the plates form a single body.

9. The docking station of claim 5, wherein at least one of the plates is a discreet body.

10. The docking station of claim 5, further comprising at least one index pin extending from one of the plates, and receivable in a hole defined in the bracket to secure the support frame against movement relative to the support bracket.

11. The docking station of claim 1, further comprising a two-piece, length-adjustable strap attached to the infant carrier holder and the support frame.

12. The dockeing station of claim 11, further comprising a left side bracket and a right side bracket fastened to a left side and a right side of the infant carrier holder respectively, wherein the two-piece, length-adjustable strap is attached to the left side bracket and the right side bracket.

13. The docking station of claim 1, wherein the support frame includes a front plate, wherein the infant carrier holder is attached to the front plate using a left side front bracket and a right side front bracket, each having a side section attached to a side of the infant carrier holder, and another section attached to the front plate.

14. The docking station of claim 13, wherein each another section is attached to the front plate with a respective interconnector that is attached to the front plate, wherein each interconnector has a first surface attached to the front plate, and a second surface oriented so that, when the support frame is attached to the bracket that are fixed to a surface in the patient compartment of an ambulance, the infant carrier holder is oriented with a tilt angle in the range 40°-45° degrees relative to the horizontal plane.

15. The docking station of claim 14, further comprising a carrying bar coupled to the interconnectors.

16. A system comprising: the docking station of claim 1, and the support bracket, the support bracket having mounting holes for mounting on a wall, and a plurality of spaced slots each for receiving at least one of the couplers.

17. The system of claim 16, wherein each coupler includes a support that extends from an exterior surface of the support frame, and a head at a distal end of the support and wider than the support thereof, and each slot has two sections, which together form an elongated channel with a cross section that has two different widths, wherein the first section of each slot has a width that is dimensioned to permit the reception of the head of a respective coupler, wherein the second section of each slot is only wide enough to permit the entry of the support of the respective coupler but not the head thereof, wherein the second section of each slot extends from the exterior surface of the bracket to the first section, wherein the first section extends from the second section into the body of the bracket, and wherein the head of each coupler is receivable in a slot from an open end thereof.

18. The system of claim 16, further comprising an index pin on the support frame, wherein the support bracket has at least one hole for receiving the index pin to secure the support frame against movement relative to the support bracket.

19. The system of claim 16, wherein the slots in the support bracket are vertically oriented once the support bracket is installed.

20. The system of claim 16, wherein the slots in the support bracket are horizontally oriented once the support bracket is installed.
